# EUROPEAN PATENT APPLICATION

(11) **EP 3 379 836 A1**
(43) Date of publication of application: **26.09.2018**
(21) Application number: 16865492.9
(22) Date of filing: 03.06.2016
(51) Int. Cl.: H04N 21/231

(54) **METHOD AND DEVICE FOR ACCELERATING PLAYING OF SINGLE-FRAGMENT VIDEO**

(30) Priority: 18.11.2015 CN 201510799528
(71) Applicant: Shenzhen TCL New Technology Co., LTD, Shenzhen, Guangdong 518052 (CN)
(72) Inventor: WANG, Wenbiao, Shenzhen Guangdong 518052 (CN)
(74) Representative: Kuhnen & Wacker Patent- und Rechtsanwaltsbüro PartG mbB
(86) International application number: PCT/CN2016/084846
(87) International publication number: WO 2017/084311

(57) **Abstract**

Disclosed is a method and device for accelerating playback of a single-fragment video. The method includes: when a video playback request sent by a playback end being intercepted, obtaining from the video playback request a first requested time point and a segment data length of the single-fragment video; downloading video data from the first requested time point of the target single-fragment video, and forwarding the downloaded video data to the playback end for real-time playback; and when a data length of the downloaded video data being equal to the segment data length, simultaneously downloading and caching one or more data segments following the data segment corresponding to the first requested time point in the target single-fragment video. On the basis of ensuring smooth playback of the single-fragment video data by the playback end, this disclosure accelerates data downloading and caching of the single-fragment video. Thus, the playback end can call the data segments to be played to the largest possible degree, thereby accelerating the playback of the single-fragment video.

## Description

### FIELD OF THE DISCLOSURE

The present disclosure relates to the field of network streaming media transmission technology, and more particularly to a method and a device for accelerating playback of a single-fragment video.

### BACKGROUND OF THE DISCLOSURE

With the development of Internet technology, video on demand (VoD) has gradually become one of the most popular Internet applications. At present, there are various network players (i.e., a playback end) on the Internet that support network on demand, such as iQiyi, Tencent, LeTV, Mango TV, etc. These network players perform video on demand through cooperation with their respective web servers (i.e., a server end).

In the process of video on demand, the download of code streams (i.e., video data) is often processed using a multi-task downloading method to achieve the purpose of speeding up the downloading and smoothing up video playback. By "multi-task downloading", it means fragmenting the target data to be downloaded into segments, then downloading these data segments simultaneously by means of multiple download tasks, and at last piecing together the downloaded data into the target data. With regard to video-on-demand, a target video file on the server end falls into either of two categories: single-fragment and multi-fragment, depending on whether the target video file is fragmented.

Currently, the exiting playback acceleration schemes are for only multi-fragment target video files. That is, the server end cuts the target video file into small blocks. Each of these blocks is an individual fragment that has its own link address, and the link addresses of all the fragments of the target video are stored sequentially in an m3u8 format file. When playing a multi-fragment target video file, the playing end first obtains the m3u8 format file and parses out all the link addresses therein, and then initiates multi-task downloading and caches the target video file for calling and playing by the playback end, where each task corresponds to one fragment. However, none playback acceleration schemes exist for single-fragment target video files.

### SUMMARY OF THE DISCLOSURE

The present disclosure is to provide a method and a device for accelerating playback of a single-fragment video, which aims to solve the technical problem that none playback acceleration schemes exist for single-fragment target video files.

In order to achieve the above aim, the present disclosure provides a method for accelerating playback of a single-fragment video which includes:

When a video playback request sent to a server end by a playback end for requesting playback of a target single-fragment video being intercepted, determining the legitimacy of the video playback request;

When the legitimacy of the video playback request being determined to be valid, obtaining the first requested time point of the target single-fragment video requested to be played and the segment data length of the data segment requested to be played in the video playback request; the first requested time point being a playback start time point of the target single-fragment video requested to play; the segment data length being a data length of the data segment of the target single-fragment video requested to be played by the playback end at a time;

Downloading video data from the first requested time point of the target single-fragment video on the server end, and forwarding the downloaded video data to the playback end for real-time playback;

When a data length of the downloaded video data being equal to the segment data length, simultaneously downloading and caching one or more data segments following the data segment corresponding to the first requested time point in the target single-fragment video, for being subsequently invoked and played by the playback end;

Recording a caching progress of cached data segments in real time; when being detected that the data segment the playback end requests to be played is a cached data segment, obtaining the caching progress of the data segment requested to be played, the data segment requested to be played being used as a caching-requested data segment;

If the caching progress of the caching-requested data segment is ready, forwarding the caching-requested data segment to the playback end for playback; if the caching progress of the cache requesting data segment is not ready, reminding the playback end to wait for the caching-requested data segment to be finished downloading.

The present disclosure also provides a method for accelerating playback of a single-fragment video which includes:

When a video playback request sent to a server end by a playback end for requesting playback of a target single-fragment video being intercepted, obtaining from the video playback request a first requested time point of the target single-fragment video that is requested to be played and a segment data length of a data segment requested to be played;

Downloading video data from the first requested time point of the target single-fragment video on the server end, and forwarding the downloaded video data to the playback end for real-time playback; and

When a data length of the downloaded video data being equal to the segment data length, simultaneously downloading and caching one or more data segments following the data segment corresponding to the first requested time point in the target single-fragment video, for being subsequently invoked and played by the playback end.

In order to achieve the above aim, the present disclosure also provides a device for accelerating playback of a single-fragment video which includes:

An obtaining module, configured to, in response to interception of a video playback request sent to a server by a playback end for requesting playback of a target single-fragment video, obtain from the video playback request a first requested time point of the target single-fragment video that is requested to be played and a segment data length of a data segment requested to be played ;

A downloading and forwarding module, configured to download video data from the first requested time point of the target single-fragment video on the server end, and forward the downloaded video data to the playback end for real-time playback;

A downloading and caching module, configured to simultaneously download and cache one or more data segments following the data segment corresponding to the first requested time point in the target single-fragment video for being subsequently invoked and played by the playback end when a data length of the downloaded video data is equal to the segment data length.

In the present disclosure, on the basis of ensuring that the playback end plays the single-fragment video data smoothly, downloading and caching of the single-fragment video data are accelerated, the playback end can call the data segments to be played to the largest possible degree, and thereby playback of the single-fragment video is accelerated.

### BRIEF DESCRIPTION OF THE DRAWINGS

FIG. 1 is a flow diagram illustrating a first embodiment of a method for accelerating playback of a single-fragment video;

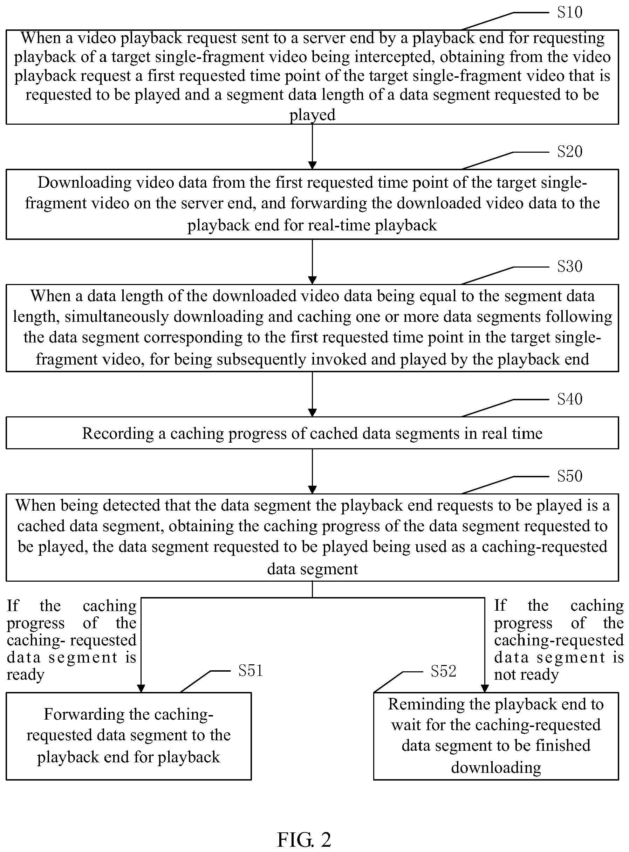

FIG. 2 is a flow diagram illustrating a second embodiment of the method for accelerating playback of a single-fragment video;
FIG. 3 is a flow diagram illustrating a third embodiment of the method for accelerating playback of a single-fragment video;

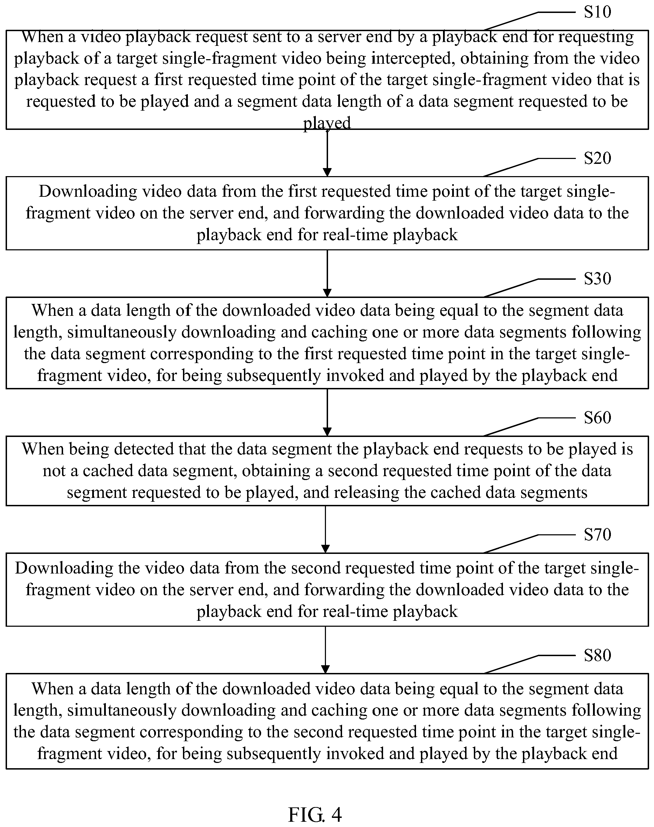

FIG.4 is a flow diagram illustrating a forth embodiment of the method for accelerating playback of a single-fragment video;

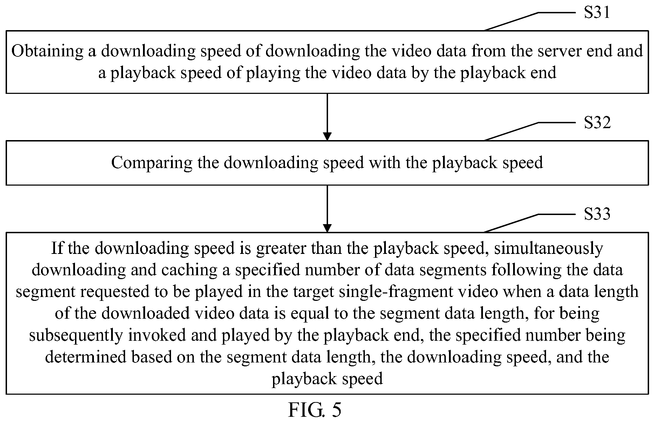

FIG. 5 is a flow diagram illustrating the block "when a data length of the downloaded video data is equal to the segment data length, simultaneously downloading and caching one or more data segments following the data segment corresponding to the first requested time point in the target single-fragment video for being subsequently invoked and played by the playback end" in a fifth embodiment of the method for accelerating playback of a single-fragment video;

Various implementations, functional features, and advantages of the present disclosure will now be described in further detail with reference to the accompanying drawings and some illustrative embodiments.

### Detailed description of the embodiments

The foregoing description portrays merely some illustrative embodiments of the present disclosure, and are not intended to limit the patentable scope of the present disclosure.

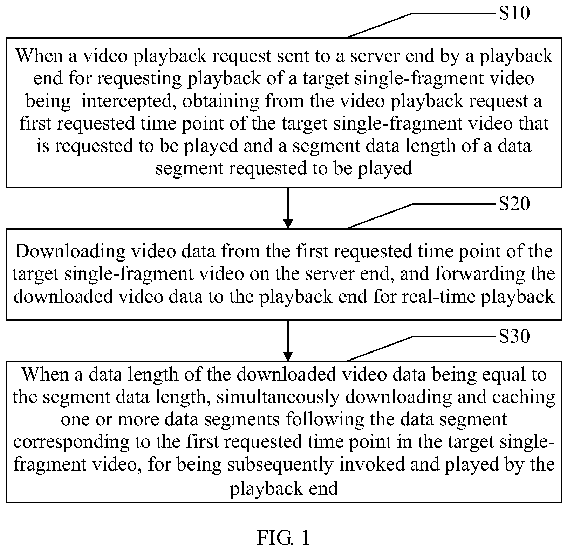

The present disclosure provides a method for accelerating playback of a single-fragment video, in a first embodiment of the method for accelerating playback of the single-fragment video, referring to Fig. 1, the method for accelerating playback of the single-fragment video includes:

S10, when a video playback request sent to a server end by a playback end for requesting playback of a target single-fragment video being intercepted, obtaining from the video playback request a first requested time point of the target single-fragment video that is requested to be played and a segment data length of a data segment requested to be played;

When the device for accelerating playback of the single-fragment video (hereinafter referred to as an acceleration device) intercepts a video playback request sent from a playback end (e.g., a network player) to a server end(video storage server corresponding to the network player), the first requested time point and the segment data length in the video playback request are obtained, wherein the acceleration module is transparent with respect to the server end and the playback end, and is an agent-like independent module provided between the server end and the playback end; the video playback request is used to request to play the target single-fragment video; the first requested time point is a playback start time point of the target single-fragment video requested to play; the segment data length is a data length of the data segment of the target single-fragment video requested to be played by the playback end at a time. In this embodiment, data segments near the first requested time point of the target single-fragment video are not downloaded or cached.

When the acceleration device intercepts the video playback request sent from the playback end to the server end, the legitimacy of the video playback request is determined, that is, determining whether the identity of the playback end that sends the video playback request is valid or not, determining whether the target single-fragment video corresponding to the video playback request exists on the corresponding server end or not, and determining whether the entire single-fragment of the target single-fragment video is normal or not through skipping request segmentation tests of the target single-fragment video corresponding to the video playback request, etc., when the legitimacy of the video playback request is determined to be valid, the first requested time point of the target single-fragment video requested to be played and the segment data length of the data segment requested to be played in the video playback request are obtained.

S20, downloading video data from the first requested time point of the target single-fragment video on the server end, and forwarding the downloaded video data to the playback end for real-time playback;

When the acceleration device obtains the first requested time point and segment data length of the target single-fragment video, the downloaded video data would not be cached immediately, but for a while the downloaded video data is forwarded in real time to the playback end for real-time playback at the same time when the video data is downloaded, that is, downloading video data from the first requested time point of the target single-fragment video on the server end, and forwarding the downloaded video data to the playback end for real-time playback. For example, the target single-fragment video is a video data with a duration of 100s and a data length of 20M, the first requested time point is 0s, and the segment data length is 2M, then the acceleration device downloads video data starting from 0s of the target single-fragment video on the server end, and forwards the downloaded video data to the playback end for real-time playback, so as to avoid stuck playback at the beginning of the network video on demand, which affects the smooth playback of the video and affects the user experience.

S30, when a data length of the downloaded video data being equal to the segment data length, simultaneously downloading and caching one or more data segments following the data segment corresponding to the first requested time point in the target single-fragment video, for being subsequently invoked and played by the playback end.

When the data length of the video data downloaded by the acceleration device is equal to the length of the segment data, it can be determined whether the data length of the video data downloaded by the acceleration device is greater than the preset data length of the data length of the video data that has been played on the playback end (for example, 0M or 1M). When the data length of the video data downloaded by the acceleration device is greater than the preset data length of the data length of the video data already played on the playback end, it means that the download bandwidth (i.e., downloading speed) of the acceleration device is greater than the play rate (i.e., playback speed) of the playback end. At this time, the playback end smoothly plays video data, and playback acceleration is able to be initiated, i.e., one or more data segments following the data segment corresponding to the first requested time point in the target single-fragment video, for being subsequently invoked and played by the playing end. Following the above example in S20, when the data length of the video data downloaded by the acceleration device is equal to 2M, one or more 2M data segments following 2M in the target single-fragment video are simultaneously downloaded and cached, if the number of the cached data segment is one, the data segment in the 2M to 4M section of the target single-fragment video are downloaded and cached for being subsequently invoked and played by the playback end; if the number of the cached data segments are three, the data segments in the 2M to 4M section, 4M to 6M section, 6M to 8M section of the target single-fragment video are downloaded and cached for being subsequently invoked and played by the playback end.

In this embodiment, the first requested time point and the segment data length in the video playback request are obtained when the video playback request sent by the playback end is intercepted; then video data from the first requested time point of the target single-fragment video on the server end is downloaded and the downloaded video data is forwarded to the playback end for real-time playback; when the data length of the downloaded video data is equal to the segment data length, one or more data segments following the data segment corresponding to the first requested time point in the target single-fragment video for being subsequently invoked and played by the playing end are simultaneously downloaded and cached, so as to avoid slow downloading and stuck playback of the data segment being played due to simultaneous downloading and caching of multiple data segments when the playback end just starts playing the received video data. When the data length of the downloaded video data is equal to the length of the segment data, that is, at the same time when the data segments start to be continuous, the playback on the playback end can be smooth, one or more data segments following the data segment corresponding to the first requested time point in the target single-fragment video are simultaneously downloaded and cached, so as to cache video data as much as possible, accordingly on the basis of ensuring that the playback end plays the single-fragment video data smoothly, downloading and caching of the single-fragment video data are accelerated, the playing end can call the data fragments to be played is ensured to the largest possible degree, and thereby the playback of the single-fragment video is accelerated.

Further, on the basis of the first embodiment of the method for accelerating playback of the single-fragment video, the present disclosure provides a second embodiment, in the second embodiment, subsequent to S30, it further includes:

S40, recording a caching progress of cached data segments in real time;

When caching the data segments of the target single-fragment video, the caching progress of each cached data segment is recorded in real time, and the caching progress may include two states: ready or not ready. When a certain data segment is finished downloading and caching, its caching progress is ready; when a data segment is not finished downloading and caching, its caching progress is not ready.

S50, when being detected that the data segment the playback end requests to be played is a cached data segment, obtaining the caching progress of the data segment requested to be played, the data segment requested to be played being used as a caching-requested data segment;

When the acceleration device again intercepts a second video playback request about the target single fragment video sent from the playback end, the second video playback request is detected. If detecting that the data segment the playback end requests again to be played is the cached data segment, the caching progress of the data segment requested again to be played is obtained, the data segment requested again to be played is used as the caching-requested data segment. The caching progress of the caching-requested data segment is obtained.

S501, determining whether the caching process of the caching-requested data segment is ready or not;

S51, if the caching progress of the caching-requested data segment is ready, the caching-requested data segment is forwarded to the playback end for playback;

S52, if the caching progress of the caching-requested data segment is not ready, the playback end is reminded to wait for the caching-requested data segment to be finished downloading.

The acceleration device obtains the caching progress of the caching-requested data segment. If the caching progress of the caching-requested data segment is ready, it indicates that the acceleration device has already finished downloading the caching-requested data segment from the server end and finished caching it, the caching-requested data segment is directly forwarded from the cache to the playback end for playback. If the caching progress of the caching-requested data segment is not ready, it indicates that the acceleration device has not finished downloading the caching-requested data segment from the server end and caching it yet, the caching-requested data segment could not be gotten from the cache, an instruction is sent to the playback end, the playback end is reminded to wait for the caching-requested data segment to be finished downloading, or the playback end is controlled to stop playing by the remind instruction the instruction and to wait for the caching-requested data segment to be finished downloading, the required time needed to download the caching-requested data segment could be displayed on the playback end at the same time.

In this embodiment, after simultaneously downloading and caching one or more data segments following the data segment corresponding to the first requested time point in the target single-fragment video, the caching progress of each cached data segment is recorded in real time, and when it is detected that the caching-requested data segment is requested to be played by the playback end, the caching progress of the data segment requested to be played is obtained, if the caching progress of the caching-requested data segment is ready, the caching-requested data segment is forwarded to the playback end for playback; if the caching progress of the caching-requested data segment is not ready, the playback end is reminded to wait for the caching-requested data segment to be finished downloading; thus when the network condition is better, the caching-requested data segment is directly forwarded to the playback end, if the network condition is not good, the playback end is reminded to wait to accelerate caching more data before playing, to avoid frequently stuck playback.

Further, on the basis of the second embodiment of the method for accelerating playback of the single-fragment video, the present disclosure provides a third embodiment, in the third embodiment, subsequent to S52, the method for accelerating playback of a single-fragment video further includes:

S53, when a duration of the playback end waiting for downloading of the caching-requested data segment being longer than a preset waiting duration, downloading and caching the caching-requested data segment at a full speed until the caching progress of the caching-requested data segment is ready.

When it is detected that the playback end requests to play the caching-requested data segment, the caching progress of the caching-requested data segment is obtained. When it is determined that the caching progress of the caching-requested data segment is not ready, the playback end is reminded by the acceleration device to wait for the caching-requested data segment to be finished downloading. When it is detected that the duration of the playback end waiting for downloading the caching-requested data segment is longer than the preset waiting duration, it indicates that the waiting duration of the playback end waiting for downloading the caching-requested data segment is too long, the network speed may not be good, it is not appropriate to continue to download multiple data segments together, the downloading of data segments other than the caching-requested data segment requested to be played are paused, the caching-requested data segment is downloaded and cached at a full speed until the caching progress of the caching-requested data segment is ready.

For example, the target single-fragment video is a video data with a duration of 100s and a data length of 20M, the first requested time point is 0s, and the segment data length is 2M. After the data segment in the 0M to 2M section is finished downloading, simultaneously the data segments in the 2M to 4M section, in the 4M to 6M section, in the 6M to 8M section of the target single-fragment video are downloaded and cached. The data segment requested to be played by the playback end is the data segment in the 4M to 6M section, while the caching process of the data segment in the 4M to 6M section is not ready, the playback end is reminded by the acceleration device to wait for the data segment in the 4M to 6M section to be finished downloading; when it is detected that the duration of the playback end waiting for downloading of caching-requested data segment is longer than the preset waiting duration, the downloading of data segments in the 2M to 4M section, in the 6M to 8M section are paused, the data segment in the 4M to 6M section is downloaded and cached at a full speed, when the caching progress of the data segment in the 4M to 6M section is ready, the downloading of data segments in the 2M to 4M section, in the 6M to 8M section are started again.

In this embodiment, when the duration of the playback end waiting for downloading of the caching-requested data segment is longer than a preset waiting duration, the caching-requested data segment is downloaded and cached at a full speed until the caching progress of the caching-requested data segment is ready. It avoids the playback end waiting for too long time, flexibly adjusts the downloading status of each data segment, and prevents the playback end from stuck playback for a long time.

Further, on the basis of the first embodiment of the method for accelerating playback of the single-fragment video, the present disclosure provides a forth embodiment, in the forth embodiment, subsequent to S30, it further includes:

S60, when being detected that the data segment the playback end requests to be played is not a cached data segment, obtaining a second requested time point of the data segment requested to be played, and releasing the cached data segments;

When the data length of the downloaded video data being equal to the segment data length, simultaneously downloading and caching one or more data segments following the data segment corresponding to the first requested time point in the target single-fragment video, if at this moment the video playback request sent by the playback end is detected again, and the data segment requested to be played in the video playback request is not the previously cached data segment, that is, when the playback end requests to play the data segment that has not been downloaded or cached in the target single-fragment video, the start time point(i.e., the second time point) of the data segment requested to be played is obtained, and the cached data segment is released. For example, the target single-fragment video is a video data with a duration of 100s and a data length of 20M, the first requested time point is 0 s, and the segment data length is 2 M, the cached data segments are the data segments in the 2M to 4M section, 4M to 6M section, 6M to 8M section, at this moment the playback end requests to play the data segment in the 12M to 14M section, then the start time point of the data segment in the 12M to 14M section is obtained, and the cached data segments in the 2M to 4M section, 4M to 6M section, 6M to 8M section are released.

S70, downloading the video data from the second requested time point of the target single-fragment video on the server end, and forwarding the downloaded video data to the playback end for real-time playback;

S80, when a data length of the downloaded video data is equal to the segment data length, simultaneously downloading and caching one or more data segments following the data segment corresponding to the second requested time point in the target single-fragment video, for being subsequently invoked and played by the playback end.

Following the above example in S60, the video data from the start time point (i.e., the second time point) of the data segment in the 12M to 14M section of the target single-fragment video on the server end is downloaded, and the video data downloaded from the data segment in the 12M to 14M section to the playback end for real-time playback is forwarded. When the data length of the video data downloaded from the data segment in the 12M to 14M section is equal to the segment data length, one or more data segments following the data segment in the 12M to 14M section are downloaded and cached simultaneously, such as data segment s in the 14M to 16M section, in the 16M to 18M section, in the 18M to 20M section are downloaded and cached simultaneously.

In this embodiment, when it is detected that the data segment the playback end requests to be played is not the cached data segment, the data segment the playback end newly requests to be played is downloaded at a full speed, and the downloaded video data is forwarded to the playback end for real-time playback. At the same time, the previously cached data segment is released, and the downloading of all other data segments are paused. When the downloaded data length of the data segment newly requested to be played is equal to the segment data length, that is, the data segment newly requested to be played is finished downloading, one or more data segments following the data segment corresponding to the second requested time point in the target single-fragment video are simultaneously downloaded and cached, that is, one or more data segments following the data segment newly requested to be played in the target single-fragment video, for being subsequently invoked and played by the playback end.

Further, on the basis of the first embodiment of the method for accelerating playback of the single-fragment video, the present disclosure provides a fifth embodiment, in the fifth embodiment, S30 further includes:

S31, obtaining a downloading speed of downloading the video data from the server end and a playback speed of playing the video data by the playback end;

The acceleration device obtains the downloading speed (i.e. download bandwidth, the number of bits of data downloaded per unit of time) of the video data downloaded from the server end and the playback speed of the video data played by the playback end (i.e., playing rate, the number of data bits played per unit of time), for example, the downloading speed is 4Mbps, and the playback speed is 2Mbps.

S32, comparing the downloading speed with the playback speed; and

S33, if the downloading speed is greater than the playback speed, simultaneously downloading and caching a specified number of data segments following the data segment requested to be played in the target single-fragment video when a data length of the downloaded video data is equal to the segment data length, for being subsequently invoked and played by the playback end, the specified number being determined based on the segment data length, the downloading speed, and the playback speed.

Comparing the downloading speed with the playback speed, if the downloading speed is less than or equal to the playback speed, the data segments following the data segment requested to be played in the single-fragment video continues to be downloaded when the data length of the downloaded video data is equal to the segment data length, and the downloaded video data is forwarded to the playback end for real-time playback, that is, the downloading is continued while the downloaded video data is forwarded in real time; if the downloading speed is greater than the playback speed, a specified number of data following the data segment requested to be played in the target single-fragment video is simultaneously downloaded and cached when the data length of the downloaded video data is equal to the segment data length, for being subsequently invoked and played by the playback end, the specified number is based on the segment data length, the downloading speed, and the playback speed. For example, the downloading speed is 8Mbps, the playback speed is 2Mbps, and the segment data length is 2M, then it needs 0.25s to download the segment data with the segment data length and needs 1s to play one segment data, then the time interval between finishing downloading one segment data with finishing playing one segment on the playback end is 0.75s, which can download 6M video data within 0.75s. The 6M video data is exactly the data length of 3 data segment s, the preset number is 3.

In this embodiment, by obtaining and comparing the downloading speed and the playback speed, if the downloading speed is greater than the playback speed, a specified number of data segments following the data segment requested to be played in the target single-fragment video is simultaneously downloaded and cached when the data length of the downloaded video data is equal to the segment data length, for being subsequently invoked and played by the playback end, the specified number is based on the segment data length, the downloading speed, and the playback speed, so as to avoid stuck playback on the playback end due to caching data segment when the downloading speed is less than or equal to the playback speed; also to avoid too long downloading time of caching data fragment due to too large number of downloading and caching data segment s, to avoid stuck playback on the playback end due to the playback end invoking data segment that has not finished downloading; and also to avoid a waste of download bandwidth due to the number of data segment s of downloading and caching is too small.

Further, on the basis of the second, third embodiment of the method for accelerating playback of the single-fragment video, S30 further includes:

S31, obtaining a downloading speed of downloading the video data from the server end and a playback speed of playing the video data by the playback end;

The acceleration device obtains the downloading speed (i.e. download bandwidth, the number of bits of data downloaded per unit of time) of the video data downloaded from the server end and the playback speed of the video data played by the playback end (i.e., playing rate, the number of data bits played per unit of time), for example, the downloading speed is 4Mbps, and the playback speed is 2Mbps.

S32, comparing the downloading speed with the playback speed; and

S33, if the downloading speed is greater than the playback speed, simultaneously downloading and caching a specified number of data segments following the data segment requested to be played in the target single-fragment video when a data length of the downloaded video data is equal to the segment data length, for being subsequently invoked and played by the playback end, the specified number being determined based on the segment data length, the downloading speed, and the playback speed.

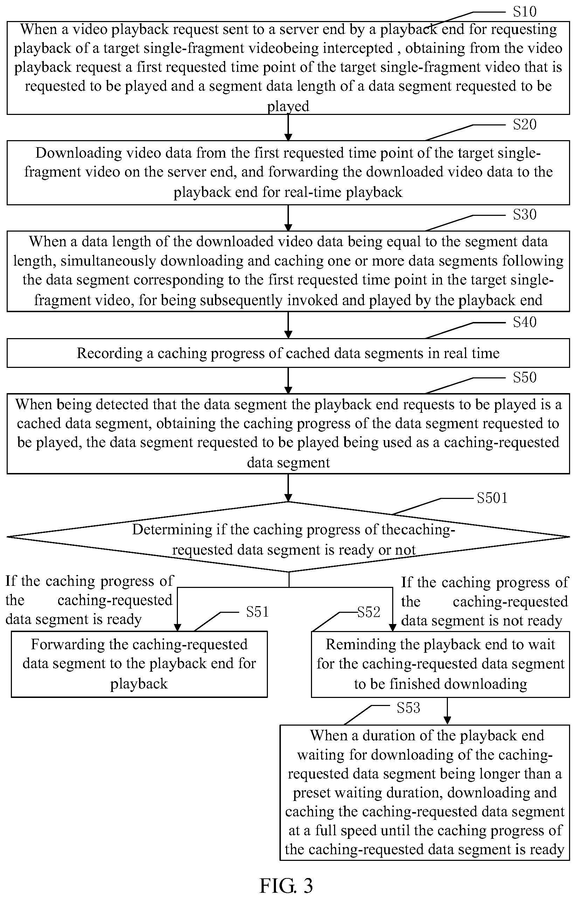

The present disclosure also provides a device for accelerating playback of a single-fragment video, in a first embodiment of the device for accelerating playback of the single-fragment video, referring to Fig. 3, the device for accelerating playback of the single-fragment video includes:

An obtaining module, configured to, in response to interception of a video playback request sent to a server by a playback end for requesting playback of a target single-fragment video, obtain from the video playback request a first requested time point of the target single-fragment video that is requested to be played and a segment data length of a data segment requested to be played;

A downloading and forwarding module, configured to download video data from the first requested time point of the target single-fragment video on the server end, and forward the downloaded video data to the playback end for real-time playback;

A downloading and caching module, configured to simultaneously download and cache one or more data segments following the data segment corresponding to the first requested time point in the target single-fragment video for being subsequently invoked and played by the playback end when a data length of the downloaded video data is equal to the segment data length.

For the explanation and effect of this embodiment, reference may be made to the content of the first embodiment of the method for accelerating playback of the single-fragment video of the present disclosure.

Further, on the basis of the first embodiment of the device for accelerating playback of the single-fragment video, the present disclosure provides a second embodiment, in the second embodiment, the device for accelerating playback of the single-fragment video further includes:

A cache recording module, configured to record a caching progress of cached data segments in real time;

A caching progress obtaining module, configured to obtain a caching progress of the data segment requested to be played when detecting that the data segment the playback end requests to be played is a cached data segment, use the data segment requested to be played as a caching-requested data segment; and

A caching progress execution module, the caching progress execution module including a first execution unit and a second execution unit, wherein

The first execution unit is configured to forward the caching-requested data to the playback end for playback if the caching progress of the caching-requested data fragment is ready; and

The second execution unit is configured to remind the playback end to wait for the caching-requested data segment to be finished downloading if the caching progress of the caching-requested data segment is not ready.

For the explanation and effect of this embodiment, reference may be made to the content of the first embodiment of the method for accelerating playback of the single-fragment video of the present disclosure.

Further, on the basis of the second embodiment of the device for accelerating playback of the single-fragment video, the present disclosure provides a third embodiment, in the third embodiment, the caching progress execution module further includes:

A third execution unit, configured to download and cache the caching-requested data segment at a full speed when a duration of the playback end waiting for downloading of the caching-requested data segment is longer than a preset waiting duration, until the caching progress of the caching-requested data segment is ready.

For the explanation and effect of this embodiment, reference may be made to the content of the first embodiment of the method for accelerating playback of the single-fragment video of the present disclosure.

Further, on the basis of the first embodiment of the device for accelerating playback of the single-fragment video, the present disclosure provides a forth embodiment, in the forth embodiment, the device for accelerating playback of the single-fragment video further includes:

An obtaining and releasing module, configured to obtain a second requested time point of the data segment requested to be played, and to release the cached data segments, when detecting that the data segment the playback end requests to be played is not a cached data segment;

The downloading and forwarding module, further configured to download the video data from the second requested time point of the target single-fragment video on the server end, and to forward the downloaded video data to the playback end for real-time playback;

The downloading and caching module, further configured to simultaneously download and cache one or more data segments following the data segment corresponding to the second requested time point in the target single-fragment video for being subsequently invoked and played by the playback end, when a data length of the downloaded video data is equal to the segment data length.

For the explanation and effect of this embodiment, reference may be made to the content of the first embodiment of the method for accelerating playback of the single-fragment video of the present disclosure.

Further, on the basis of the first embodiment of the device for accelerating playback of the single-fragment video, the present disclosure provides a fifth embodiment, in the fifth embodiment, the downloading and caching module further includes:

A speed obtaining unit, configured to obtain a downloading speed of downloading the video data from the server end and a playback speed of playing the video data by the playback end;

A speed comparing unit, configured to compare the downloading speed with the playback speed; and

A downloading and caching unit, configured to, if the downloading speed is greater than the playback speed, simultaneously download and cache a specified number of data segments following the data segment requested to be played in the target single-fragment video for being subsequently invoked and played by the playback end when a data length of the downloaded video data is equal to the segment data length, the specified number being determined based on the segment data length, the downloading speed, and the playback speed.

For the explanation and effect of this embodiment, reference may be made to the content of the first embodiment of the method for accelerating playback of the single-fragment video of the present disclosure.
The foregoing description portrays merely some illustrative embodiments of the present disclosure, and are not intended to limit the patentable scope of the present disclosure. Any equivalent structural or flow transformations based on the specification and the drawing of the present disclosure, or any direct or indirect applications of the present disclosure in other related technical fields, shall all fall within the protection scope of the present disclosure.

## Claims

1. A method for accelerating playback of a single-fragment video, comprising:
when a video playback request sent to a server end by a playback end for requesting playback of a target single-fragment video being intercepted, determining the legitimacy of the video playback request;
when the legitimacy of the video playback request being determined to be valid, obtaining the first requested time point of the target single-fragment video requested to be played and the segment data length of the data segment requested to be played in the video playback request; the first requested time point being a playback start time point of the target single-fragment video requested to play; the segment data length being a data length of the data segment of the target single-fragment video requested to be played by the playback end at a time;
obtaining from the video playback request a first requested time point of the target single-fragment video that is requested to be played and a segment data length of a data segment requested to be played;
downloading video data from the first requested time point of the target single-fragment video on the server end, and forwarding the downloaded video data to the playback end for real-time playback;
when a data length of the downloaded video data being equal to the segment data length, simultaneously downloading and caching one or more data segments following the data segment corresponding to the first requested time point in the target single-fragment video, for being subsequently invoked and played by the playback end;
recording a caching progress of cached data segments in real time; when being detected that the data segment the playback end requests to be played is a cached data segment, obtaining the caching progress of the data segment requested to be played, the data segment requested to be played being used as a caching-requested data segment;
if the caching progress of the caching-requested data segment is ready, forwarding the caching-requested data segment to the playback end for playback; if the caching progress of the cache requesting data segment is not ready, reminding the playback end to wait for the caching-requested data segment to be finished downloading.

2. The method of claim 1, further comprising, subsequent to the block "if the caching progress of the caching-requested data segment is not ready, reminding the playback end to wait for the caching-requested data fragment to be finished downloading":
when a duration of the playback end waiting for downloading of the caching-requested data segment being longer than a preset waiting duration, downloading and caching the caching-requested data segment at a full speed until the caching progress of the caching-requested data segment is ready.

3. The method of claim 2, further comprising, subsequent to the block "when a data length of the downloaded video data being equal to the segment data length, simultaneously downloading and caching one or more data segments following the data segment corresponding to the first requested time point in the target single-fragment video for being subsequently invoked and played by the playback end":
when being detected that the data segment the playback end requests to be played is not a cached data segment, obtaining a second requested time point of the data segment requested to be played, and releasing the cached data segments;
downloading the video data from the second requested time point of the target single-fragment video on the server end, and forwarding the downloaded video data to the playback end for real-time playback;
when a data length of the downloaded video data being equal to the segment data length, simultaneously downloading and caching one or more data segments following the data segment corresponding to the second requested time point in the target single-fragment video, for being subsequently invoked and played by the playback end.

4. The method of claim 2, wherein the block "when a data length of the downloaded video data being equal to the segment data length, simultaneously downloading and caching one or more data fragments following the data segment corresponding to the first requested time point in the target single-fragment video, for being subsequently invoked and played by the playback end" comprises:
obtaining a downloading speed of downloading the video data from the server end and a playback speed of playing the video data by the playback end;
comparing the downloading speed with the playback speed; and
if the downloading speed is greater than the playback speed, simultaneously downloading and caching a specified number of data segments following the data segment requested to be played in the target single-fragment video when a data length of the downloaded video data is equal to the segment data length, for being subsequently invoked and played by the playback end, the specified number being determined based on the segment data length, the downloading speed, and the playback speed.

5. The method of any one of claims 1, further comprising, subsequent to the block "when a data length of the downloaded video data being equal to the segment data length, simultaneously downloading and caching one or more data segments following the data segment corresponding to the first requested time point in the target single-fragment video for being subsequently invoked and played by the playback end":
when being detected that the data segment the playback end requests to be played is not a cached data segment, obtaining a second requested time point of the data segment requested to be played, and releasing the cached data segments;
downloading the video data from the second requested time point of the target single-fragment video on the server end, and forwarding the downloaded video data to the playback end for real-time playback;
when a data length of the downloaded video data being equal to the segment data length, simultaneously downloading and caching one or more data segments following the data segment corresponding to the second requested time point in the target single-fragment video, for being subsequently invoked and played by the playback end.

6. The method of any one of claims 1, wherein the block "when a data length of the downloaded video data being equal to the segment data length, simultaneously downloading and caching one or more data fragments following the data segment corresponding to the first requested time point in the target single-fragment video, for being subsequently invoked and played by the playback end" comprises:
obtaining a downloading speed of downloading the video data from the server end and a playback speed of playing the video data by the playback end;
comparing the downloading speed with the playback speed; and
if the downloading speed is greater than the playback speed, simultaneously downloading and caching a specified number of data segments following the data segment requested to be played in the target single-fragment video when a data length of the downloaded video data is equal to the segment data length, for being subsequently invoked and played by the playback end, the specified number being determined based on the segment data length, the downloading speed, and the playback speed.

7. A method for accelerating playback of a single-fragment video, comprising:
when a video playback request sent to a server end by a playback end for requesting playback of a target single-fragment video being intercepted, obtaining from the video playback request a first requested time point of the target single-fragment video that is requested to be played and a segment data length of a data segment requested to be played;
downloading video data from the first requested time point of the target single-fragment video on the server end, and forwarding the downloaded video data to the playback end for real-time playback; and
when a data length of the downloaded video data being equal to the segment data length, simultaneously downloading and caching one or more data segments following the data segment corresponding to the first requested time point in the target single-fragment video, for being subsequently invoked and played by the playback end.

8. The method of claim 7, further comprising, subsequent to the block "when a data length of the downloaded video data being equal to the segment data length, simultaneously downloading and caching one or more data segments following the data segment corresponding to the first requested time point in the target single-fragment video for being subsequently invoked and played by the playback end":
recording a caching progress of cached data segments in real time;
when being detected that the data segment the playback end requests to be played is a cached data segment, obtaining the caching progress of the data segment requested to be played, the data segment requested to be played being used as a caching-requested data segment;
if the caching progress of the caching-requested data segment is ready, forwarding the caching-requested data segment to the playback end for playback;
if the caching progress of the cache requesting data segment is not ready, reminding the playback end to wait for the caching-requested data segment to be finished downloading.

9. The method of claim 8, further comprising, subsequent to the block "if the caching progress of the caching-requested data segment is not ready, reminding the playback end to wait for the caching-requested data fragment to be finished downloading":
when a duration of the playback end waiting for downloading of the caching-requested data segment being longer than a preset waiting duration, downloading and caching the caching-requested data segment at a full speed until the caching progress of the caching-requested data segment is ready.

10. The method of any one of claims 9, further comprising, subsequent to the block "when a data length of the downloaded video data being equal to the segment data length, simultaneously downloading and caching one or more data segments following the data segment corresponding to the first requested time point in the target single-fragment video for being subsequently invoked and played by the playback end":
when being detected that the data segment the playback end requests to be played is not a cached data segment, obtaining a second requested time point of the data segment requested to be played, and releasing the cached data segments;
downloading the video data from the second requested time point of the target single-fragment video on the server end, and forwarding the downloaded video data to the playback end for real-time playback;
when a data length of the downloaded video data being equal to the segment data length, simultaneously downloading and caching one or more data segments following the data segment corresponding to the second requested time point in the target single-fragment video, for being subsequently invoked and played by the playback end.

11. The method of any one of claims 9, wherein the block "when a data length of the downloaded video data being equal to the segment data length, simultaneously downloading and caching one or more data fragments following the data segment corresponding to the first requested time point in the target single-fragment video, for being subsequently invoked and played by the playback end" comprises:
obtaining a downloading speed of downloading the video data from the server end and a playback speed of playing the video data by the playback end;
comparing the downloading speed with the playback speed; and
if the downloading speed is greater than the playback speed, simultaneously downloading and caching a specified number of data segments following the data segment requested to be played in the target single-fragment video when a data length of the downloaded video data is equal to the segment data length, for being subsequently invoked and played by the playback end, the specified number being determined based on the segment data length, the downloading speed, and the playback speed.

12. A device for accelerating playback of a single-fragment video, comprising:
an obtaining module, configured to, in response to interception of a video playback request sent to a server by a playback end for requesting playback of a target single-fragment video, obtain from the video playback request a first requested time point of the target single-fragment video that is requested to be played and a segment data length of a data segment requested to be played;
a downloading and forwarding module, configured to download video data from the first requested time point of the target single-fragment video on the server end, and forward the downloaded video data to the playback end for real-time playback;
a downloading and caching module, configured to simultaneously download and cache one or more data segments following the data segment corresponding to the first requested time point in the target single-fragment video for being subsequently invoked and played by the playback end when a data length of the downloaded video data is equal to the segment data length.

13. The device of claim 12, further comprising:
a cache recording module, configured to record a caching progress of cached data segments in real time;
a caching progress obtaining module, configured to obtain a caching progress of the data segment requested to be played when detecting that the data segment the playback end requests to be played is a cached data segment, use the data segment requested to be played as a caching-requested data segment; and
a caching progress execution module, the caching progress execution module comprising a first execution unit and a second execution unit, wherein
the first execution unit is configured to forward the caching-requested data to the playback end for playback if the caching progress of the caching-requested data fragment is ready; and
the second execution unit is configured to remind the playback end to wait for the caching-requested data segment to be finished downloading if the caching progress of the caching-requested data segment is not ready.

14. The device of claim 13, wherein the caching progress execution module further comprises:
a third execution unit, configured to download and cache the caching-requested data segment at a full speed when a duration of the playback end waiting for downloading of the caching-requested data segment is longer than a preset waiting duration, until the caching progress of the caching-requested data segment is ready.

15. The device of any one of claims 14, further comprising:
an obtaining and releasing module, configured to obtain a second requested time point of the data segment requested to be played, and to release the cached data segments, when detecting that the data segment the playback end requests to be played is not a cached data segment;
the downloading and forwarding module being further configured to download the video data from the second requested time point of the target single-fragment video on the server end, and to forward the downloaded video data to the playback end for real-time playback;
the downloading and caching module being further configured to simultaneously download and cache one or more data segments following the data segment corresponding to the second requested time point in the target single-fragment video for being subsequently invoked and played by the playback end, when a data length of the downloaded video data is equal to the segment data length.

16. The device of any one of claims 14, wherein the downloading and caching module comprises:
a speed obtaining unit, configured to obtain a downloading speed of downloading the video data from the server end and a playback speed of playing the video data by the playback end;
a speed comparing unit, configured to compare the downloading speed with the playback speed; and
a downloading and caching unit, configured to, if the downloading speed is greater than the playback speed, simultaneously download and cache a specified number of data segments following the data segment requested to be played in the target single-fragment video for being subsequently invoked and played by the playback end when a data length of the downloaded video data is equal to the segment data length, the specified number being determined based on the segment data length, the downloading speed, and the playback speed.
